# EUROPÄISCHE PATENTSCHRIFT

(11) **EP 1 848 266 B1**
(45) Veröffentlichungstag und Bekanntmachung des Hinweises auf die Patenterteilung: **27.07.2011**
(21) Anmeldenummer: 05756020.3
(22) Anmeldetag: 02.06.2005
(51) Int. Cl.: A01K 1/01

(54) **KOTFÖRDEREINRICHTUNG UND VERFAHREN ZUM BETREIBEN EINER KOTFÖRDEREINRICHTUNG**
EXCREMENT CONVEYOR SYSTEM AND METHOD FOR OPERATING AN EXCREMENT CONVEYOR SYSTEM
SYSTEME DE TRANSPORT D'EXCREMENTS ET PROCEDE POUR LE FONCTIONNEMENT D'UN SYSTEME DE TRANSPORT D'EXCREMENTS

(30) Priorität: 17.02.2005 DE 102005007120
(43) Veröffentlichungstag der Anmeldung: 31.10.2007
(73) Patentinhaber: Qalovis Farmer Automatic Energy GmbH, 48366 Laer (DE)
(72) Erfinder: KÜHLMANN, Josef, 48366 Laer (DE)
(74) Vertreter: Habbel, Hans-Georg
(86) Internationale Anmeldenummer: PCT/DE2005/000994
(87) Internationale Veröffentlichungsnummer: WO 2006/086934

(56) Entgegenhaltungen:
- DE-A1- 10 142 548
- DE-B3- 10 254 535
- DE-C1- 19 514 574
- US-A- 1 791 381
- US-A1- 2005 028 748
- DATABASE WPI Section PQ, Week 199234 Derwent Publications Ltd., London, GB; Class P11, AN 1992-282623 XP002350072 -& SU 1 690 580 A1 (UKRNIIAGROPROEKT COOP) 15. November 1991 (1991-11-15)

## Beschreibung

Die Erfindung bezieht sich auf ein Verfahren und eine Vorrichtung zum Betreiben einer Kotfördereinrichtung für Tierzuchtbetriebe gemäß dem Oberbegriff des Anspruches 1 und dem Oberbegriff des Anspruches 6.

Kotfördereinrichtungen für Tierzuchtbetriebe, die aus einem umlaufenden, unterhalb eines Stallbodens angeordneten, angetriebenen Kotförderband bestehen und Umlenkrolle aufweisen, sind z. B. aus der DE 195 14 574 C1 bekannt. Diese bekannte Einrichtung ist für Geflügelzuchtbetriebe geeignet, wobei Geflügel einen relativ festen, aber feuchten Kot abscheidet, bei dem eine Trennung von Kot und Urin nicht möglich ist.

Bei der Einrichtung gemäß der DE 195 14 574 C1 ergibt sich die Schwierigkeit, daß textile Flächengebilde nur sehr schwer als Förderbänder geführt werden können, sondern stets das Bestreben haben, von den Antriebs- und Umlenkrollen abzugleiten, da aufgrund der Gewebestruktur eine einwandfreie Führung des Bandes nicht möglich ist. Bei dieser bekannten Einrichtung hat man den Geradeauslauf des Bandes dadurch sichergestellt, daß die Umlenkrolle ebenfalls angetrieben wird und ständig eine höhere Drehzahl aufweist als die Antriebsrolle, wobei Versuche ergaben, daß durch diese Anordnung eine einwandfreie Führung des Kotförderbandes möglich ist.

In der US 3 119 373 wird eine Schwemmentmistungseinrichtung beschrieben, bei der unterhalb eines den Standplatz der Stalltiere bildenden Gitterrostes eine vorzugsweise durch Kunststoffplatten abgedeckte schiefe Ebene gebildet ist, auf der ein Schieber gleiten kann, der durch einen Motor mit Hilfe eines Ketten- und Rollenantriebes über die schiefe Ebene bewegt werden kann. Um die Fördereinrichtung für diesen Dungschieber stets gespannt zu halten, ist einer der beiden Drehachsen, insbesondere der für die nicht angetriebenen Laufrollen, eine Spannvorrichtung in Gestalt einer Feder zugeordnet, die auf das Lager der Drehachse wirkt. Hier ist die Umlenkrolle zwar schwimmend gelagert, aber es handelt sich hierbei nicht um eine angetriebene Umlenkrolle.

Bei Tierzuchtanlagen, in denen Tiere gehalten werden, die festen Kot und flüssigen Urin abscheiden, z. B. Schweine, bestehen erhebliche Schwierigkeiten, dieses sehr feuchte , breiige Gemisch abzufördern. Beispielsweise aus der DE 35 28 604 A1 ist zwar eine Entmistungsanlage für Kleintierfarmen bekanntgeworden, die zweiteilig ausgebildet ist, nämlich einerseits aus einem flüssigkeitsdichten Bodenteil besteht, das als Urinsammelrinne dient, wobei oberhalb dieser flüssigkeitsdichten Bodenrinne ein Durchfallrost vorgesehen ist. Dieser Durchfallrost wird durch ein Förderaggregat oder Förderband gebildet, das nicht umlaufend ein Ober- und Untertrum aufweist, sondern aus einer einfachen Schicht eines feuchtigkeitsdurchlässigen Materials besteht, wobei diese Schicht beispielsweise ein gitterartiges Gewebe sein kann.

Der Einsatz einer solchen Anordnung bei Schweinezuchtbetrieben würde sich nicht bewähren, da der hier anfallende feste Kot noch relativ weich ist und durch den Durchfallrost durchfallen würde.

Werden in Schweinezuchtbetrieben Förderbänder zur Abförderung des Kotes eingesetzt, tritt ein sehr schnelles Verschmutzen der eigentlichen Umlenkrollen auf, so daß die Förderbänder seitlich auslaufen. Auch der Versuch in der Praxis, die Antriebs- und/oder Umlenkrolle ballig auszubilden, um damit eine Geradeführung des Förderbandes zu erreichen, hat sich nicht bewährt, da die Verschmutzung zu groß ist und die festen Kotbestandteile die Balligkeit der Umlenk- und Antriebsrolle aufheben.

Auch der Versuch, Umlenk- und/oder Antriebsrolle als Gitterrollen auszubilden, um damit eine entsprechende Führung zu erreichen, hat sich nicht bewährt, da sich dann diese Rollen innerhalb des Gitters außerordentlich schnell zusetzen.

Aus der US 2005/0028748 A1 ist ein Verfahren bekanntgeworden, bei dem die Umlenkrolle in Längsachse des Kotförderbandes verschiebbar ist und durch eine Stellvorrichtung beaufschlagt wird, durch die eine Spannung des Kotförderbandes reguliert wird, wobei die die Spannung des Kotförderbandes erzeugende Stellvorrichtung intermittierend wirksam wird. Hierbei ist auch vorgeschlagen worden, die Umlenkrolle gegenläufig zur Antriebsrolle anzutreiben. Diese bekannte Einrichtung hat sich in der Praxis bewährt, ist jedoch konstruktionsmäßig sehr aufwendig.

Aus der DE 101 42 548 A1 ist ein Stall für die Haltung von Säugetieren bekannt geworden, der eine Kotfördereinrichtung aufweist, die aus einem umlaufenden, unterhalb eines kotdurchlässigen Stallbodens angeordneten, um angetriebene Umlenkrollen geführten Kotförderband besteht, das flüssigkeitsdurchlässig ausgebildet ist, wobei wenigstens das Untertrum über einer Auffangfläche läuft.

Bei dieser bekannten Einrichtung besteht das Kotförderband aus einem gelochten oder siebartigen Band, wobei die festen Bestandteile, die aus Einstreu und Kot bestehen, auf dem Obertrum aufgefangen und nach außen abtransportiert werden, während die flüssigen Bestandteile des Kots, hier Harn, durch diese Auffangfläche durchtreten und in eine gesonderte Sammel- und Ableiteinrichtung für die flüssigen Stoffe gelangen. Diese Auffangeinrichtung ist die Bodenfläche des Troges, in dem das Förderband umläuft, der entsprechend geneigt sein muss,

Der Erfindung liegt die Aufgabe zugrunde, eine Kotfördereinrichtung für Tierzuchtbetriebe zu schaffen, bei der eine Trennung von Kot und Urin erfolgt, bei dem der Geradeauslauf des Bandes trotz erheblicher Verschmutzungen garantiert ist, weiterhin ein Reinigen der Umlenkrollen erfolgt, wobei weiterhin diese Einrichtung sehr kostengünstig hergestellt und betrieben werden soll.

Diese der Erfindung zugrundeliegende Aufgabe wird durch die Lehre des Anspruches 1 gelöst.

Vorteilhafte Ausgestaltungen des erfindungsgemäßen Verfahrens sind in den Unteransprüchen 2 bis 5 erläutert.

Mit anderen Worten ausgedrückt wird ein Verfahren für ein Kotförderband vorgeschlagen, das um zwei Antriebsrollen - der vorderen und der hinteren Antriebsrolle - geführt wird. Beide Antriebsrollen sind intermittierend angetrieben, aber laufen mit unterschiedlichen Geschwindigkeiten. So wird beispielsweise die vordere Antriebsrolle kurzfristig für einen Zeitraum von wenigen Minuten schneller umlaufend angetrieben als die hintere Antriebsrolle und nach Ablauf einer gewissen Zeitspanne der Ruhe, d. h. des Stillstandes des Bandes, wird die hintere Umlenkrolle schneller angetrieben als die vordere, wobei diese Schaltung in einfachster Weise durch Frequenzregler erfolgen kann, aber auch durch andere elektronische oder elektrische Einrichtungen geregelt werden kann.

Die jeweils schneller umlaufend angetriebene Rolle läuft schneller als das eigentliche Kotförderband und durch die zwischen Rolle und Bandunterseite entstehende Reibung erfolgt eine Reinigung des Bandes, eine Reinigung der Rolle und - was sehr wesentlich ist - gleichzeitig hat das Band die Möglichkeit, wieder in den Geradeauslauf zurückzukommen, wenn es aus dem Geradeauslauf ausgelaufen ist.

Die Umlaufgeschwindigkeit der beiden Rollen ist sehr niedrig. Zum Beispiel läuft die schneller angetriebene Umlenkrolle mit einer Umdrehungsgeschwindigkeit von 1,5 U/min. um, während die jeweils langsamer angetriebene Umlenkrolle mit einer Umlaufgeschwindigkeit von 1 U/min. angetrieben wird.

Die Erfindung bezieht sich dann weiterhin auf eine Kotfördereinrichtung für Tierzuchtbetriebe gemäß dem Oberbegriff des Anspruches 6.

Vorteilhafte Ausgestaltungen dieser Kotfördereinrichtung sind in den Unteransprüchen 7 bis 14 erläutert.

Mit anderen Worten ausgedrückt, wird ein flüssigkeitsdurchlässiges gelochtes Kunststoffblech als Kotförderband vorgeschlagen, dem einenendes, und zwar dem Obertrum, einer Kotsammelrinne zugeordnet ist, wobei dem anderen Ende, nämlich dem Untertrum, eine Urinsammelrinne zugeordnet ist. Das Untertrum läuft dabei in einem flüssigkeitsdichten Trog um und das Untertrum fördert den sich sammelnden Urin zur Urinsammelrinne hin ab.

Aufgrund der langsamen Umlaufgeschwindigkeit des eigentlichen Förderbandes trocknet bereits der Kot auf dem Obertrum und wird somit in relativ festem, fast trockenem Zustand an die Kotsammelrinne abgegeben.

Die Größe und Art der Lochung des Kunststoffbandes richtet sich nach dem Einsatzfall.

Die Umlenkrollen sind aus Edelstahl gefertigt, so daß es möglich ist, auch dem Urin Säuren zuzusetzen, um damit Amoniakverluste zu vermeiden. Der Trog, in dem das Untertrum läuft, wird vorzugsweise durch eine entsprechende Kunststofffolie gebildet, die den Vorteil hat, einerseits absolut dicht zu sein, zum anderen eine hohe Gleitfähigkeit aufzuweisen, so daß das Untertrum, also das eigentliche Band, problemlos auf dieser Folie gleiten kann.

In einfachster Weise wird der Trog durch seitliche Betonleisten gebildet, die vorzugsweise innerhalb von Kunststoffwandelementen ausgebildet werden. Diese Wandelemente dienen einerseits mit ihrem Fuß zur Auflage für das Untertrum des Kotförderbandes, zum anderen weist die geneigte Dachfläche den Vorteil auf, daß hier ein Zufördern des Kotes zum Band hin erfolgen kann und schließlich sind diese Wandelemente korrosionsfest.

Die Wandelemente bestehen aus einzelnen Platten, die in Längsrichtung gesehen untereinander dadurch miteinander verbunden werden, daß in den Rückwänden dieser Platten Ösen ausgeformt sind, in die entsprechende Stabilisierungsdrähte oder -stangen eingeführt werden können. Gleichzeitig sind aber auch diese einander gegenüberliegenden Wandelemente durch Lochblechelemente miteinander verbunden, so daß eine feste Konstruktion geschaffen wird.

In diesen Wandelementen und in den Betonleisten sind Lagerstangen eingelagert, die das Obertrum des Kotförderbandes unterstützen.

Zusammenfassend ist also festzustellen, daß durch den erfindungsgemäßen Vorschlag eine Kotfördereinrichtung erreicht wird, die einerseits für eine Trennung von Urin und festem Kot Sorge trägt, wobei der Kot schon gut angetrocknet an die Kotsammelrinne abgegeben wird. Gleichzeitig erfolgt eine kontinuierliche Abförderung des Kotes und des Urins, wodurch sichergestellt ist, daß ein gutes Stallklima erreicht wird, d. h. eine hohe Luftqualität. Unabhängig von diesen Vorteilen wird außerdem erreicht, daß das Band trotz erheblicher Verschmutzungen stets im Geradeauslauf gehalten wird und daß ein kontinuierliches Reinigen der Umlenkrollen erfolgt. Dadurch, daß wenigstens eine Umlenkrolle spannbar ausgebildet ist, wird auch erreicht, daß das Kunststoffband unabhängig von im Stall herrschenden Temperaturen und Be-lastungen stets ausreichend gespannt gehalten werden kann.

Ein Ausführungsbeispiel der Erfindung wird nachfolgend anhand der Zeichnungen erläutert. Die Zeichnungen zeigen dabei in
- Fig. 1: eine Seitenansicht auf eine erfindungsgemäße Wandkonstruktion, in

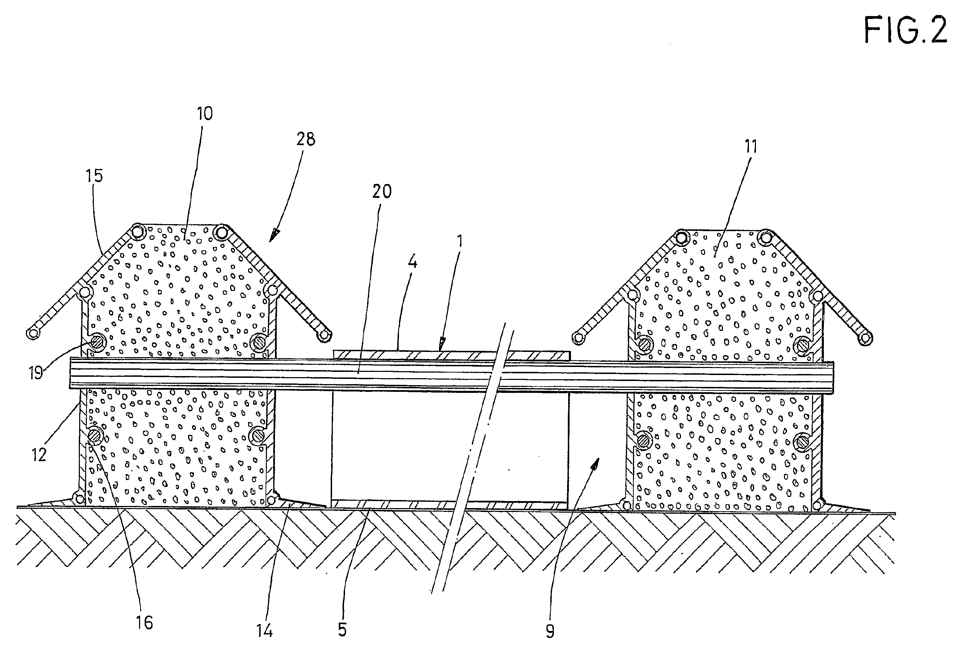

- Fig. 2: einen Schnitt gemäß der Linie 2 -2 in Fig. 1 und in

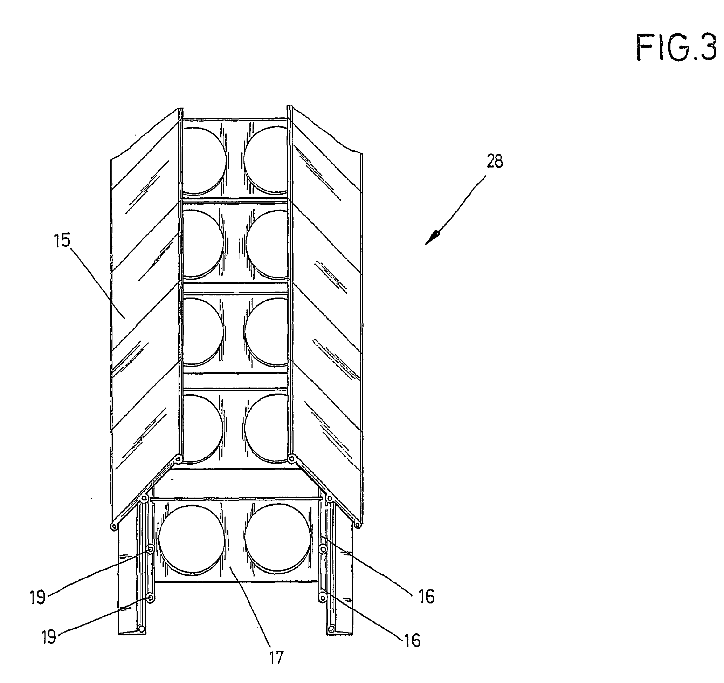

- Fig. 3: in einem größerem Maßstab eine Ansicht auf einige zusammengefaßte Wandelemente zur Auf- nahme der Betonleisten.

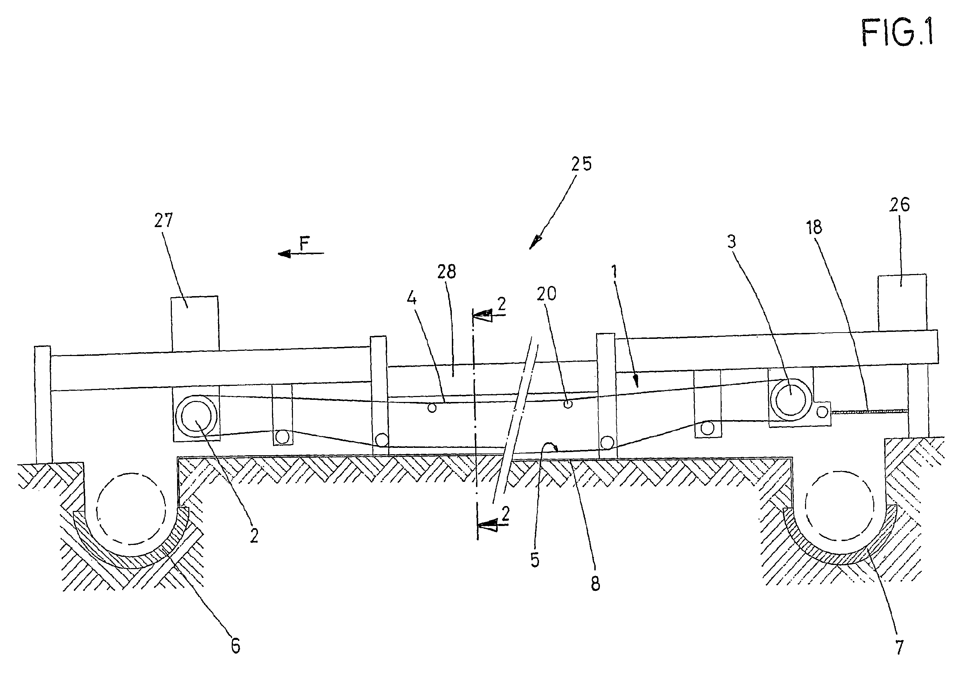

In Fig. 1 ist eine Kotfördereinrichtung 25 dargestellt, die ein Kotförderband 1 aufweist, das z. B. aus einem gelochten Kunststoffband besteht, das um Umlenkrollen 2 und 3 geführt ist, so daß ein Obertrum 4 und ein Untertrum 5 gebildet werden. Das Obertrum 4 ruht auf Lagerstangen 20 auf und das Untertrum 5 liegt auf einer auf dem Untergrund 8 aufliegenden Kunststofffolie auf, so daß hier eine gute Gleitfähigkeit des Kunststoffbandes auf der Kunststofffolie des Untergrundes gewährleistet ist. In der Zeichnung gemäß Fig. 1 ist dies aus Übersichtlichkeitsgründen nicht so dargestellt. Die Umlenkrolle 3 ist über eine Spannvorrichtung 18 verschieblich gelagert, d. h. spannbar gelagert. Hierdurch ist es möglich, das Kunststoffband 1 unabhängig herrschender Temperaturverhältnisse stets gleich konstant gespannt zu halten. Die Spannvorrichtung 18 kann mechanisch, hydraulisch oder pneumatisch arbeiten und kann automatisch oder individuell gesteuert werden.

Den Umlenkrollen 2 und 3 sind Elektromotore 27 und 26 zugeordnet, d. h. also beide Umlenkrollen 2 und 3 werden motorisch angetrieben. Das Kotförderband 1 besteht aus einem gelochten Kunststoffband und zumindest das Untertrum 5 läuft in einem Trog 9, der durch seitliche Wandungen 10 und 11 begrenzt wird.

Bei dem dargestellten Ausführungsbeispiel ist der Umlenkrolle 2 und dem Obertrum 4 dann, wenn das Kotförderband 1 in Pfeilrichtung F umläuft, eine Kotsammelrinne 6 zugeordnet, in der schematisch eine Förderschnecke dargestellt ist. Bei einer solchen Ausführungsform ist der Umlenkrolle 3 eine Urinsammelrinne 7 zugeordnet, und wie aus der Darstellung in Fig. 1 erkennbar, ist das letzte Ende des Untergrundes 8 bei dieser Ausführungsform leicht geneigt, so daß der durch das Untertrum 5 diesem Ende zugeförderte Urin von selbst zur Urinsammelrinne 7 abfließt.

Die Wandungen 10 und 11 bestehen aus Beton, wobei diese Betonleisten durch Wandelemente 28 begrenzt werden. Jedes Wandelement 28 besteht aus einer Vertikalwand 12, einem Dachteil 15 und einem Fußteil 14, wobei das Dachteil des zum Troginneren hin gerichteten Wandelementes 28 zum Troginneren hin von oben nach unten geneigt ist. Das äußere Wandelement 28 trägt auch ein solches Dachteil 15, das aber nach außen geneigt ist. Auf der Innenseite der Vertikalwände 12 sind Ösen 16 vorgesehen, die Verbindungsstäbe 19 aufnehmen, die die Wandelemente 28 in ihrer Längsrichtung miteinander verbinden. In Querrichtung sind die Wandelemente 28 durch Lochblechelemente 17 miteinander-verbunden, so daß eine "stabile Schalung" für den einzugießenden Beton geschaffen wird. Außerdem durchqueren sowohl die Wandelemente 28 wie auch die Betonleisten Lagerstangen 20, auf denen das Obertrum 4 des Kotförderbandes 1 aufruht.

Die Arbeitsweise dieses Kotförderbandes 1 ist derart, daß beide Umlenkrollen 2 und 3 über die Elektromotore 26 und 27 angetrieben werden. Hierbei läuft einmal der Motor 26 schneller als der Motor 27 und nach einem bestimmten Zeitintervall und einer Stillstandszeit wird dieser Antrieb so umgeschaltet, daß dann der Motor 26 langsamer und der Motor 27 schneller läuft. Trotz dieser unterschiedlichen Umdrehungsgeschwindigkeiten - entweder des einen oder anderen Motors - läuft das Band in gleicher Richtung um, und zwar immer mit der Geschwindigkeit des langsamer laufenden Motors.

Das Band wird aber nicht konstant angetrieben, sondern beispielsweise nach einer Zeitspanne von 1 - 4 Minuten werden beide Motore stillgesetzt und erst nach einer individuell einzuregelnden Zeit wieder in Betrieb genommen. Hierdurch hat der auf dem Obertrum 4 auflagernde relativ feste Kot ausreichend Zeit abzutropfen und auch schon vorzutrocknen. Das Untertrum 5 schwimmt in dem sich sammelnden Urin und da das eigentliche Kotförderband 1 ein gelochtes Kunststoffband ist, fördert dieses gelochte Kunststoffband nunmehr den Urin zur Urinsammelrinne 7, während gleichzeitig der feste Kot an der Kotsammelrinne 6 abgegeben und von dort abgeführt wird.

## Patentansprüche

1. Verfahren zum Betreiben einer Kotfördereinrichtung (25) für Tierzuchtbetriebe mit einem umlaufend angetriebenen, unterhalb eines kotdurchlässigen Stallbodens angeordneten Kotförderband (1) mit zwei angetriebenen Umlenkrollen (2,3), um die das Band umläuft, **dadurch gekennzeichnet, daß** beide angetriebenen Umlenkrollen (2,3) intermittierend, in gleicher Richtung und mit unterschiedlicher Umdrehungsgeschwindigkeit angetrieben werden und jede Umlenkrolle in Intervallen schneller oder langsamer angetrieben wird.

2. Verfahren nach Anspruch 1, **dadurch gekennzeichnet, daß** die unterschiedlichen Drehzahlen der beiden angetriebenen Umlenkrollen durch Frequenzregler gesteuert werden.

3. Verfahren nach Anspruch 1 oder 2, **dadurch gekennzeichnet, daß** die jeweilige Dauer des Antriebs der Umlenkrollen zwischen 1 bis 4 Minuten beträgt.

4. Verfahren nach einem oder mehreren der vorhergehenden Ansprüche, **dadurch gekennzeichnet, daß** die Umdrehungsgeschwindigkeit der schneller angetriebenen Rolle bei einem Rollendurchmesser von etwa 90 - 110 mm etwa 1,5 U/min. beträgt.

5. Verfahren nach einem oder mehreren der vorhergehenden Ansprüche, **dadurch gekennzeichnet, daß** die Umdrehungsgeschwindigkeit der langsamer angetriebenen Umlenkrolle bei einem Rollendurchmesser von etwa 90 - 110 mm etwa 1 U/min. beträgt.

6. Kotfördereinrichtung für Tierzuchtbetriebe, bestehend aus einem umlaufenden, unterhalb eines kotdurchlässigen Stallbodens angeordneten, um angetriebene Umlenkrollen (2, 3) geführten, flüssigkeitsdurchlässigen Kotförderband (1), wobei dem Abgabeende des Obertrums (4) eine Kotsammelrinne (6) zugeordnet ist und das Untertrum (5) in einem flüssigkeitsdichten Trog (9) läuft, **dadurch gekennzeichnet, daß** das Kotförderband (1) aus einem gelochten Kunststoffband besteht,
dass eine Umlenkrolle (3) des Kotförderbandes (1) zwecks Bandspannung verstellbar gelagert ist,
dass dem Abgabeende des Untertrums (5) eine Urinsammelrinne (7) zugeordnet ist und
dass das Untertrum (5) den sich sammelnden Urin zur Urinsammelrinne (7) fördert.

7. Kotfördereinrichtung nach Anspruch 6, **dadurch gekennzeichnet, daß** die Umlenkrollen (2, 3) aus Edelstahl bestehen.

8. Kotfördereinrichtung nach Anspruch 6, **dadurch gekennzeichnet, daß** die Bodenseite des Troges (9) durch eine Kunststofffolie gebildet ist.

9. Kotfördereinrichtung nach einem oder mehreren der vorhergehenden Ansprüche 6 bis 8, **dadurch gekennzeichnet, daß** die Wandungen (10, 11) des Troges (9) aus Betonleisten gebildet sind.

10. Kotfördereinrichtung nach Anspruch 9, **gekennzeichnet durch** Wandelemente (28) aus Kunststoff zur Aufnahme des Betons, jeweils bestehend aus einer Vertikalwand (12), einem horizontalen Fußelement (14) und einem geneigten Dachteil (15), das geneigt wenigstens in das Troginnere vorsteht.

11. Kotfördereinrichtung nach Anspruch 10, **dadurch gekennzeichnet, daß** das Dachteil (15) auch zur Rückseite der Vertikalwand (12) übersteht.

12. Kotfördereinrichtung nach einem oder mehreren der vorhergehenden Ansprüche 10 oder 11, **gekennzeichnet durch** rohrförmige Ösen (16) wenigstens auf der Innenseite der Vertikalwände (12) zur Aufnahme von Stangen oder Drähten (19) zur Verbindung der Wandelemente (28) in Längsrichtung.

13. Kotfördereinrichtung nach einem oder meheren der vorhergehenden Ansprüche 10 bis 12, **gekennzeichnet durch** Lochblechelemente (17) zur Verbindung der Wandelemente (28) in Querrichtung.

14. Kotfördeinrichtung nach einem oder mehreren der vorhergehenden Ansprüche 6 bis 13, **gekennzeichnet durch** in den Wandungen (10, 11) gelagerte Lagerstangen (20) für das Obertrum (4).

## Claims

1. Method of driving a faeces conveying means (25) for animal breeding businesses, which conveying means has a circulatorily driven faeces conveyor belt (1) disposed underneath a stall floor through which faeces can pass and having two driven guide rollers (2, 3) around which the belt circulates, **characterised in that** both driven rollers (2, 3) are driven intermittently, in the same direction and at different speeds and that each guide roller is at intervals driven faster or slower.

2. Method in accordance with claim 1, **characterised in that** the different rotary speeds of the two driven guide rollers are regulated by frequency regulators.

3. Method in accordance with claim 1 or 2, **characterised in that** the respective time for which the guide rollers are driven is between 1 and 4 minutes.

4. Method in accordance with one or more of the foregoing claims, **characterised in that** with a roller diameter of approximately 90 - 110 mm the rotary speed of the faster driven roller is approximately 1.5 rpm.

5. Method in accordance with one or more of the foregoing claims, **characterised in that** with a roller diameter of approximately 90 - 110 mm the rotary speed of the slower driven roll is approximately 1 rpm.

6. Faeces conveying means for animal breeding businesses, comprising a rotating, liquid-permeable conveyor belt (1) disposed underneath a stall floor through which faeces can pass and guided around driven guide rollers (2, 3), where a faeces collecting channel is assigned to the output end of the upper belt run (4) and the lower belt run (5) runs in a liquid-tight trough (9), **characterised in that** the faeces conveyor belt (1) consists of a perforated plastic belt,
that a guide roller (3) of the faeces conveyor belt (1) is displaceably mounted so that it can be tensioned, a urine collecting channel (7) is assigned to the output end of the lower belt run (5) and
that the lower belt run (5) conveys the collected urine to the urine collecting channel (7).

7. Faeces conveying means in accordance with claim 6, **characterised in that** the guide rollers (2, 3) are made from high-grade steel.

8. Faeces conveying means in accordance with claim 6, **characterised in that** the floor side of the trough (9) is formed from plastic film.

9. Faeces conveying means in accordance with one or more of the foregoing claims 6 to 8, **characterised in that** the walls (10, 11) of the trough (9) are formed from concrete strips.

10. Faeces conveying means in accordance with claim 9, **characterised by** wall elements (28) made from plastic to receive the concrete, each of which wall elements (28) consists of a vertical wall (12), a horizontal foot element (14) and a sloping roof portion (15) which projects at least into the inside of the trough at an angle.

11. Faeces conveying means in accordance with claim 10, **characterised in that** the roof portion (15) also overhangs at the rear of the vertical wall (12).

12. Faeces conveying means in accordance with one or more of the foregoing claims 10 or 11, **characterised by** tubular loops (16) on at least the inside of the vertical walls (12) to receive rods or wires (19) to connect the wall elements (28) in a crosswise direction.

13. Faeces conveying means in accordance with one or more of the foregoing claims 10 to 12, **characterised by** perforated plate elements (17) to connect the wall elements (28) in a transverse direction.

14. Faeces conveying means in accordance with one or more of the foregoing claims 6 to 13, **characterised by** supporting rods (20) mounted in the walls (10, 11) to support the upper belt run (4).

## Revendications

1. Procédé pour exploiter un équipement (25) convoyeur d'excréments animaux dans des entreprises d'élevage, comprenant un tapis convoyeur (1) d'excréments entraîné en circuit fermé, agencé en dessous d'un sol d'étable perméable aux excréments, avec deux rouleaux de renvoi (2, 3) entraînés autour desquels le tapis tourne en noria, **caractérisé en ce que** les deux rouleaux de renvoi (2, 3) entraînés le sont par intermittence, dans le même sens et à des vitesses de rotation différentes, et **en ce que** chaque rouleau de renvoi est, à intervalles, entraîné plus rapidement ou plus lentement.

2. Procédé selon la revendication 1, **caractérisé en ce que** les vitesses différentes des deux rouleaux de renvoi entraînés sont pilotées par des régulateurs de fréquences.

3. Procédé selon la revendication 1 ou 2, **caractérisé en ce que** la durée respective d'entraînement des rouleaux de renvoi est comprise entre 1 et 4 minutes.

4. Procédé selon l'une ou plusieurs des revendications précédentes, **caractérisé en ce que** la vitesse de rotation du rouleau entraîné plus vite est d'environ 1,5 tour/minute pour un diamètre de rouleau d'environ 90 - 110 mm.

5. Procédé selon une ou plusieurs des revendications précédentes, **caractérisé en ce que** la vitesse de rotation du rouleau entraîné plus lentement est d'environ
1 tour/minute pour un diamètre de rouleau d'env. 90 - 110 mm.

6. Équipement convoyeur d'excréments animaux pour entreprises d'élevage, comprenant un tapis convoyeur (1) d'excréments perméable au liquide, circulant en circuit fermé, agencé sous un sol d'étable perméable aux excréments, guidé autour de rouleaux de renvoi (2, 3) entraînés, sachant qu'à l'extrémité de remise par le tronçon supérieur (4) du tapis est affectée une rigole (6) collectrice d'excréments et que le tronçon inférieur (5) circule dans une auge (9) étanche aux liquides, **caractérisé en ce que** le tapis convoyeur (1) se compose d'un tapis en matière plastique ajourée,
**en ce qu'**un rouleau de renvoi (3) du tapis convoyeur (1) d'excréments est monté sur appui réglable afin de tendre le tapis,
**en ce qu'**à l'extrémité de remise du tronçon inférieur (5) du tapis est affectée une rigole (7) collectrice d'urine et
**en ce que** le tronçon inférieur (5) du tapis convoie l'urine en cours d'accumulation vers la rigole (7) collectrice d'urine.

7. Équipement convoyeur d'excréments animaux selon la revendication 6, **caractérisé en ce que** les rouleaux de renvoi (2, 3) sont en acier inoxydable.

8. Équipement convoyeur d'excréments animaux selon la revendication 6, **caractérisé en ce que** le fond de l'auge (9) est formé par une feuille en matière plastique.

9. Équipement convoyeur d'excréments animaux selon une ou plusieurs des revendications précédentes, **caractérisé en ce que** les parois (10, 11) de l'auge (9) sont formées par des bandeaux en béton.

10. Équipement convoyeur d'excréments animaux selon la revendication 9, **caractérisé par** des éléments parois (28) en plastique servant à recevoir le béton, comprenant chaque fois une paroi verticale (12), un élément de piètement horizontal (14) et une partie toiture (15) faisant saillie de façon inclinée au moins vers l'intérieur de l'auge.

11. Équipement convoyeur d'excréments animaux selon la revendication 10, **caractérisé en ce que** la partie toiture (15) fait également saillie vers le dos de la paroi verticale (12).

12. Équipement convoyeur d'excréments animaux selon une ou plusieurs des revendications précédentes 10 ou 11, **caractérisé par** des oeillets (16) de forme tubulaire au moins sur le côté intérieur des parois verticales (12), destinés à recevoir des barres ou des fils (19) pour relier les éléments parois (28) dans le sens longitudinal.

13. Équipement convoyeur d'excréments animaux selon une ou plusieurs des revendications précédentes 10 à 12, **caractérisé par** des éléments (17) en tôle ajourée servant à relier les éléments parois (28) dans le sens transversal.

14. Équipement convoyeur d'excréments animaux selon une ou plusieurs des revendications précédentes 6 à 13, **caractérisé par** des barres d'appui (20), destinées au tronçon supérieur (4), qui reposent en appui dans les parois (10, 11).
